# EUROPÄISCHE PATENTSCHRIFT

(11) **EP 2 574 573 B1**
(45) Veröffentlichungstag und Bekanntmachung des Hinweises auf die Patenterteilung: **26.03.2014**
(21) Anmeldenummer: 12175703.3
(22) Anmeldetag: 10.07.2012
(51) Int. Cl.: B65F 1/10, B65F 1/12, B65F 1/14

(54) **Elektromagnetischer Verschlussmechanismus eines Sammelbehälters eines Entsorgungssystems**
Electromagnetic closure mechanism of a collection container of a disposal system
Mécanisme de verrouillage électromagnétique d'un récipient de collecte d'un système d'évacuation

(30) Priorität: 27.09.2011 CH 15842011
(43) Veröffentlichungstag der Anmeldung: 03.04.2013
(73) Patentinhaber: HUBTECH AG, 8117 Fällanden (CH)
(72) Erfinder: Huber, Hans Jörg, 8117 Fällanden (CH)
(74) Vertreter: Schneider Feldmann AG Patent- und Markenanwälte

(56) Entgegenhaltungen:
- EP-B1- 1 476 376
- DE-A1-102008 028 068

## Beschreibung

### Technisches Gebiet

Die vorliegende Erfindung beschreibt einen Sammelbehälter eines Aktenentsorgungssystems, umfassend einen Sammelraum mit einer in Entleerungsrichtung geneigt verlaufenden Bodenplatte, eine verschwenkbare Auswurfklappe zur Entleerung von Akten aus dem Sammelraum und einen elektromagnetischen Verschlussmechanismus mit einem Zapfen, welcher mit einer an der Auswurfklappe angeordneten Haltevorrichtung wirkverbindbar ist.

### Stand der Technik

In vielen Büros werden Akten direkt dem lokalen und eigenen Aktenvernichter übergeben. Dies ist aber für vertrauliche Akten nur beschränkt sicher genug. Zu oft sind Indiskretionen auf der Basis zu vernichtender Akten vorgekommen, indem Teile davon aus Papierabfällen der Vernichtung entzogen wurden.

Aus diesen Gründen werden in verschiedenen sensibilisierten Betrieben die Akten und anderen Datenträger zentral gesammelt und "kontrolliert" vernichtet, geshreddert und recycliert oder verbrannt. Für dieses Sammeln werden meist besonders gekennzeichnete Behälter verwendet.

Entsorgungssysteme, welche das Sammeln, Transportieren und spätere Entsorgen von vertraulichen Akten ohne Zugriffmöglichkeit von Dritten ermöglichen, sind schon seit längerem bekannt.

In der EP1476376 wird ein derartiges Entsorgungssystem beschrieben, welches es erlaubt, Akten in bewegbaren und gesicherten Sammelbehältern zu Sammeln, zu Transportieren und später in einem Entsorgungscontainer zu entsorgen. Durch einen Einwurf am Sammelbehälter können Akten aus unterschiedlichem Papier, Pappe oder Karton in einen Sammelraum des Sammelbehälters gesichert eingebracht werden. Zur späteren Entleerung weist der Sammelbehälter eine Auswurfklappe auf, welche von einem elektromagnetisch betriebenen Verschlussmechanismus öffenbar ist.

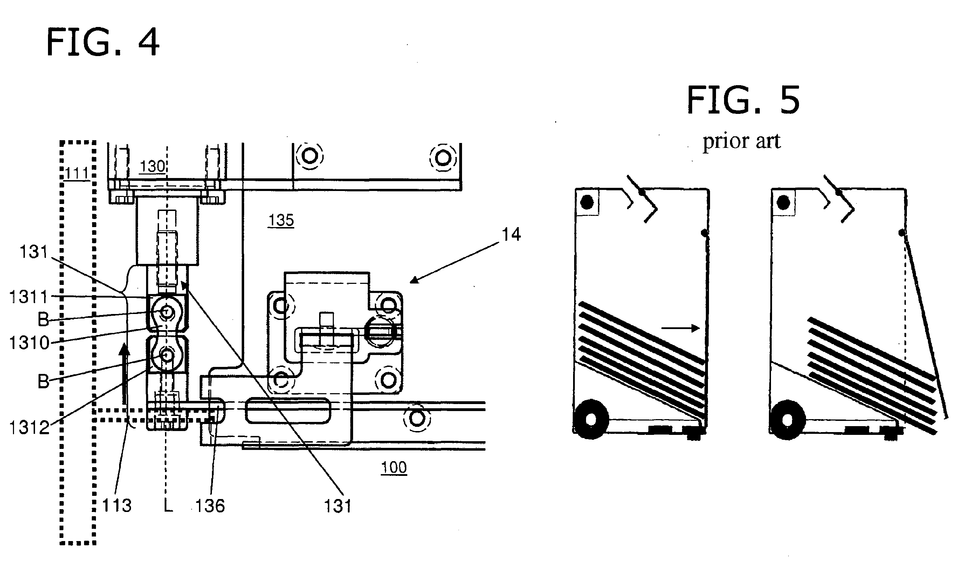

Durch die Verwendung eines elektromagnetisch gesichert gesteuerten Verschlussmechanismus wird während der gesamten Entsorgungskette ein Zugriff auf die zu entsorgenden, vertraulichen Akten verhindert. Während Akten von jedermann in den Sammelbehälter eingebracht werden können, ist der Zugriff auf den Sammelraum nur befugten Personen erlaubt, welche den elektromagnetischen Verschlussmechanismus öffnen können. Ein Beispiel eines bekannten Sammelbehälters ist in Figur 5 mit jeweils eingefüllten Akten gezeigt.

Die Bewegungen des Sammelbehälters, sowie die Öffnungs- und Entleerungsvorgänge können mit technischen Mitteln mitverfolgt und archiviert werden. Jeder Sammelbehälter ist dazu mit einer Identifizierungsvorrichtung, einem sogenannten TAG, beispielsweise in Form eines RFID TAGs ausgestattet, welcher eindeutig mit einem bestimmten Sammelbehälter in Verbindung gebracht werden kann. Somit kann protokolliert werden, welcher Sammelbehälter wann und wo in welchen Entsorgungscontainer entleert wurde. Aufgrund der eindeutigen Zuweisung der Sammelbehälter zu Kunden, kann eine präzise Protokollierung stattfinden, welche beispielsweise per GPRS an eine zentrale Datenbank drahtlos gesendet werden kann.

Es ist eine Steuereinheit vorgesehen, welche mit dem elektromagnetischen Verschlussmechanismus zusammenwirkt und nach Identifizierung des TAGs, der am Sammelbehälter befestigt ist, und festgestellter Autorisierung die Auswurfklappe zu öffnen vermag. Der elektromagnetische Verschlussmechanismus ist elektronisch codiert und kann nur durch die, die Kodierung kennende Steuereinheit geöffnet werden. Diese Steuereinheit kann am Entsorgungscontainer angebracht oder von einer befugten Person transportiert und betätigt werden.

Der elektromagnetische Verschlussmechanismus ist als Zapfenverschluss ausgebildet und kann kontrolliert unter reproduzierbaren Bedingungen nur durch berechtigte Personen geöffnet werden, wobei die Auswurfklappe verschwenkbar öffenbar ist. Durch Kontaktierung von Elektrokontakten an der Behälterhülle kann der elektromagnetische Verschlussmechanismus von aussen mittels der Steuereinheit betätigt werden.

Aufgrund der speziellen Gestaltung des Sammelraumes mit einer schrägen Bodenplatte werden die eingeworfenen Akten parallel zur geneigten Bodenplatte des Sammelraumes ausgerichtet gestapelt, was in Figur 5 angedeutet ist. Durch die Gestaltung der schrägen Bodenplatte rutschen die im Sammelraum gesammelten Akten nach Öffnung der Auswurfklappe aufgrund der Schwerkraft aus dem Sammelbehälter automatisch heraus. Ein Kippen des Sammelbehälters ist bei der Entleerung darum nicht notwendig.

Bei der bekannten Lösung gemäss der EP1476376, kann es zu einer Wechselwirkung zwischen den gesammelten Akten und dem Verschlussmechanismus kommen. In einer bekannten Ausführungsform der Sammelbehälter können je nach Papierart bis zu 80 Kilogramm Akten gesammelt werden, bevor die Sammelbehälter entleert werden müssen. Die auf die Auswurfklappe und damit indirekt auf den Zapfenverschluss wirkenden Kräfte können dazu führen, dass sich die Auswurfklappe nicht mehr definiert mittels elektromagnetischem Verschlussmechanismus öffnen lässt.

Wenn durch eingefüllte Akten grosse Druckkräfte aufgrund hoher Gewichtskraft auf die Auswurfklappe wirken, wird der Zapfen des elektromagnetischen Verschlussmechanismus stark belastet. Durch die Kraft auf die Auswurfklappe und die damit verbundene Haltevorrichtung, wird der Zapfen aus seiner zentrischen Ruhelage senkrecht zu seiner Zapfenlängsachse ausgelenkt. Durch diese Auslenkung liegt der Zapfen innerhalb eines Durchgangsloches der Haltevorrichtung an einem dem elektromagnetischen Verschlussmechanismus zugewandten Rand auf. Bei Betätigung des Verschlussmechanismus erfolgt eine lineare Bewegung des Zapfens damit wegen erhöhter Reibung innerhalb des Durchgangsloches gegen einen erhöhten Widerstand.

Möglicherweise reicht bei einem starken Anliegen des Zapfens die Magnetkraft des Elektromagneten nicht mehr aus, um den Zapfen aus dem Durchgangsloch zu befreien und damit die Haltevorrichtung freizugeben. Der elektromagnetische Verschlussmechanismus gibt in diesem Fall die Auswurfklappe nicht frei, wodurch diese geschlossen bleibt. Da der elektromagnetische Verschlussmechanismus im Inneren der Behälterhülle liegt kann ein Befugter nicht einfach manuell nachhelfen. Möglich ist lediglich das Verkippen des Sammelbehälters, wodurch der Druck der Akten auf die Auswurfklappe verringert werden kann. Durch eine Verkippung könnte die Auswurfklappe eventuell geöffnet werden, dabei hat der Sammelbehälter aber einen Abstand vom Entsorgungscontainer und somit könnten Akten unbefugt entnommen werden womit das Entsorgungssystem nicht mehr zugriffsfrei geschlossen wäre. Dies ist aber nicht möglich, da in einem solchen Fall der elektrische Kontakt zur Übertragung des Zulassungscode nicht mehr übertragen wird.

Die interne Steuereinheit des elektromagnetischen Verschlussmechanismus umfasst einen Kondensator, welcher aufgeladen und anschliessend entladen wird, wodurch der Elektromagnet kurzzeitig bis zu 4 Ampere Strom erhält. Aber trotz dieser hohen Energiezufuhr kommt es vor, dass der Zapfen nicht bewegbar ist und eine Öffnung der Auswurfklappe nicht erreicht werden kann.

Zur Erreichung einer reproduzierbaren Öffnung der Auswurfklappe unabhängig vom Füllstand des Sammelbehälters wurde versucht die Kraft des Elektromagneten zu erhöhen, um einen gewünschten Hub zu erreichen.

Dazu wurde eine Bereitstellung einer höheren elektrischen Leistung gewählt. Dies führt aber zur Änderung der Eigenschaften des gesamten elektromagnetischen Verschlussmechanismus. Der Kondensator, die elektrischen Zuleitung und die interne Steuereinheit müssen angepasst werden. Es ist ein hoher Aufwand zu betreiben, wobei neben dem Einbau neuer Bauteile auch deren Zusammenwirken neu justiert werden muss. Auch die Eigenschaften der externen Steuereinheit, welche die interne Steuereinheit mit ausreichend elektrischer Leistung versorgt, müssen entsprechend angepasst werden.

Wenn ein stärkerer und grösser ausgeführter Elektromagnet eingebaut wird, dann steigen zum einen die Kosten für die grösser dimensionierten Bauteile und der kompakte elektromagnetische Verschlussmechanismus vergrössert sich ausserdem noch.

### Darstellung der Erfindung

Die vorliegende Erfindung hat sich zur Aufgabe gestellt einen Sammelbehälter, welcher in einem kontrollierten Entsorgungssystem einsetzbar ist, derart weiterzuentwickeln, dass unabhängig vom Beladezustand des Sammelbehälters und den Druck auf den elektromagnetischen Verschlussmechanismus, die Auswurfklappe reproduzierbar mittels elektromagnetischem Verschlussmechanismus öffenbar ist, bei gleichbleibenden elektrischen Bauteilen.

Diese Aufgabe wird durch bauliche Massnahmen gelöst, wobei der Zapfen mehrteilig ausgeführt wird und eine veränderte Dynamik bei der Aktivierung des Elektomagneten erreichbar ist. Selbst wenn der Zapfen innerhalb der Haltevorrichtung geringfügig anliegt, ist der Zapfen aus dem Durchgangsloch der Haltevorrichtung linear gegen eine erhöhte Reibungskraft herausziehbar.
Da die mehrteilige Ausführung des Zapfens zu einer Stabilitätsverminderung des Zapfens führt, kann bevorzugterweise ein Federarm am Zapfen befestigt sein, welcher eine ungewollte Bewegung in einer Richtung senkrecht zur Zapfenlängsachse verhindert.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.

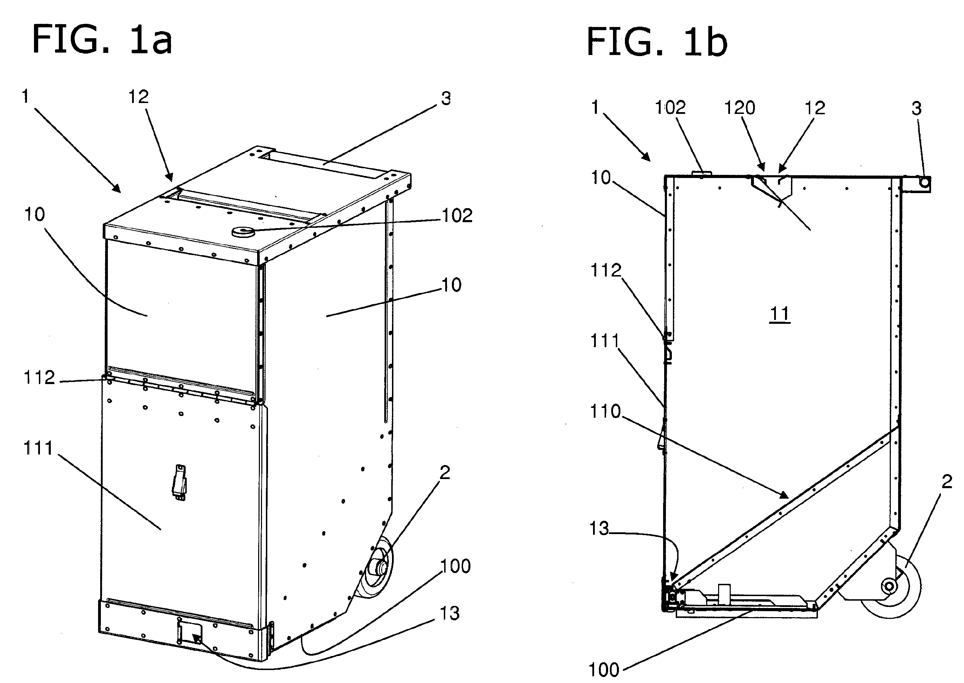

- Figur 1a: zeigt eine perspektivische Ansicht eines Sammelbehälters im geschlossenen Zustand, während
- Figur 1b: eine Schnittansicht des Sammelbehälters gemäss Figur 1a zeigt.
- Figur 2: zeigt eine perspektivische Ansicht auf den elektromagnetischen Verschlussmechanismus in Verriegelungsposition, wobei der Zapfen mit der Haltevorrichtung der Auswurfklappe zusammenwirkt.

- Figur 3: zeigt eine Aufsicht auf den auf einem Montageblech angeordneten elektromagnetischen Verschlussmechanismus in Verriegelungsposition ohne Haltevorrichtung.
- Figur 4: zeigt eine detaillierte Aufsicht auf einen Verschlussmechanismus in Verrigelungsposition mit angedeuteter eingefädelter Haltevorrichtung.
- Figur 5: zeigt den bekannten Stand der Technik eines teilweise befüllten Sammelbehälters mit geschlossener und geöffneter Auswurfklappe in einer Schnittansicht.

### Beschreibung

Im Folgenden wird ein Sammelbehälter 1 beschrieben, welcher zur Verwendung eines Aktenentsorgungssystems wie in der Beschreibungseinleitung offenbart, einsetzbar ist. Das Aktenentsorgungssystem stellt ein geschlossenes System dar, welches nach Einwurf zu entsorgender Akten in den Sammelbehälter 1 den Zugang zu den Akten durch Unbefugte verhindert. Der Inhalt des Sammelbehälters 1 wird in einen Entsorgungscontainer entleert und der gesammelte Inhalt des Entsorgungscontainers anschliessend geschreddert, wobei der Zugang zu den zu entsorgenden Akten zu jeder Zeit unterbunden ist.

Der Sammelbehälter 1 umfasst eine Behälterhülle 10 bestehend aus einer Behälterbodenwand 100 und anderen Behälterwänden, die einen Sammelraum 11 umschliessen, in welchem Akten gesammelt werden können. Der Sammelbehälter 1 weist eine Einfüllseite für Akten mit einem Einwurf 12 auf. Der Einwurf 12 ist mit einer Einwurfschikane 120 ausgestaltet. Eine Schikane innerhalb des Sammelraumes 11 im Bereich des Einwurfes 12 verhindert, dass Unbefugte eingeworfene Akten durch den Einwurf 12 dem Sammelbehälter unerlaubt entnehmen können.

Der Sammelbehälter 1 weist eine dem Boden zugewandte Auswurfseite auf. An der frontseitigen Behälterwand ist eine Auswurfklappe 111 angeordnet, welche an einem Auswurfklappenscharnier 112 schwenkbar um eine Schwenkachse gelagert ist. Im aufgeschwenkten Zustand der Auswurfklappe 111 können gesammelte Akten aus dem Sammelraum 11 abgeführt werden. Um die Entnahme von Akten aus dem Sammelraum 11 zu erleichtern ist der Sammelraum 11 mit einer geneigt angestellten Bodenplatte 110 ausgestattet. Auf dieser geneigt angestellten Bodenplatte 110, die rampenartig ausgestaltet ist, werden eingeführte Akten in einer geneigten Ausrichtung gelagert. Bei geöffneter Auswurfklappe und vertikaler Ausrichtung des Sammelbehälters 1 rutschen die Akten ohne weiteres aus dem Sammelraum hinaus.

Um den Sammelbehälter 1 einfach transportieren zu können sind an der Bodenseite Räder 2 und ist an der Einfüllseite ein Handlauf 3 angeordnet. Damit kann der Sammelbehälter 1 von einer Sammelposition zu dem Entsorgungscontainer bewegt werden, wobei der Entsorgungscontainer die gesammelten Akten des Sammelbehälters 1 übernimmt.

Jeder Sammelbehälter 1 ist mit einer Identifizierungsvorrichtung, einem Datenträger oder sogenannten TAG 102, beispielsweise in Form eines RFID TAGs ausgestattet, welcher eindeutig mit einem bestimmten Sammelbehälter 1 in Verbindung gebracht werden kann. Durch den Datenträger 102 können alle Bewegungen und Öffnungsvorgänge protokolliert und gespeichert und später ausgelesen werden.

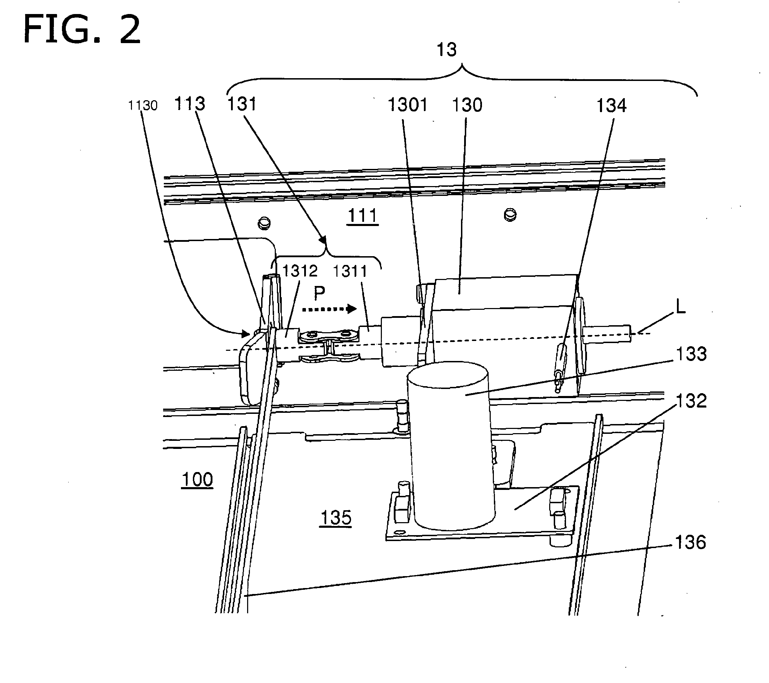

Damit nach erfolgtem Einwurf nur noch befugte Personen Zugang zu den zu entsorgenden Akten haben, ist ein gesicherter elektromagnetischer Verschlussmechanismus 13 im Bereich der Auswurfseite unterhalb der geneigt angestellten Bodenplatte 110 angeordnet. Der elektromagnetische Verschlussmechanismus 13 ist mit einer Haltevorrichtung 113 (wie in Figur 2 gezeigt) der Auswurfklappe 111 wirkverbindbar und im Bereich der Auswurfseite angeordnet.

Der elektromagnetische Verschlussmechanismus 13 umfasst einen Elektromagneten 130, einen Zapfen 131 und eine interne Steuereinheit 132. Dieser elektromagnetische Verschlussmechanismus 13 ist an der Innenfläche der Behälterbodenwand 100 direkt oder indirekt befestigt. Hier ist der elektromagnetische Verschlussmechanismus 13 beispielsweise auf einem Montageblech 135 angeordnet, welches wiederum auf der Behälterbodenwand 100 befestigt ist. Der Elektromagnet 130 ist mit einem Magnethalter 1301 auf dem Montageblech 135 befestigt.

An der Behälterhülle 10 sind nicht gezeigte Elektrokontakte angeordnet, welche zur internen Steuereinheit 132 führen. Eine externe Öffnungselektronik kann über die ausserhalb der Behälterhülle 10 angeordneten Elektrokontakte an die interne Steuereinheit 132 angeschlossen werden. Durch die interne Steuereinheit 132 ist der Elektromagnet 130 über elektrische Zuleitungen 134 antreibbar. Der Entladestrom eines aufgeladenen Kondensators 133 wird hier zum Betrieb des Elektromagneten 130 verwendet.

Der Elektromagnet 130 ist mit dem Zapfen 131 derart wirkverbunden, dass der Zapfen 131 etwa parallel zur Behälterbodenwand 100 in Richtung der Zapfenlängsachse L in Richtung eines Durchgangsloches 1130 der Haltevorrichtung 113 bewegbar ist. Der Zapfen 131 ist dabei im gesperrten Zustand mindestens teilweise in das Durchgangsloch 1130 der Haltevorrichtung 113 eingeführt.

Wie in Figur 2 erkennbar ragt der Zapfen 131 im geschlossenen Zustand der Auswurfklappe 111 durch das Durchgangsloch 1130 vollständig hindurch. In dieser Verriegelungsposition des elektromagnetischen Verschlussmechanismus 13 ist die Auswurfklappe 111 durch den Verschlussmechanismus 13 im Bereich der Behälterbodenwand 100 gesichert gehalten.

Zum Öffnen der Auswurfklappe 111 muss der elektromagnetische Verschlussmechanismus 13 in die Entriegelungsposition gebracht werden, was mit einem Pfeil P angedeutet ist. Dazu muss die externe Steuereinheit über die Elektrokontakte an die interne Steuereinheit 132 angeschlossen werden. Die interne Steuereinheit 132 ist mit einer elektronischen Kodierung versehen, welche den elektromagnetischen Verschlussmechanismus 13 und damit die Auswurfklappe 111 nur öffnet, wenn die externe Steuereinheit die korrekte elektronische Dekodierung zur Öffnung des jeweiligen Sammelbehälters 1 kennt. Sobald die Dekodierung stattgefunden hat, wird der Kondensator 133 aufgeladen. Durch die Entladung des Kondensators 133 über die elektrischen Zuleitungen 134 wird der Elektromagnet 130 betätigt, welcher den Zapfen 131 in Richtung der Zapfenlängsachse L aus dem Durchgangsloch 1130 der Haltevorrichtung 113 herauszieht, wodurch die Auswurfklappe 111 freigegeben wird. Die Entleerung findet dann aufgrund der Schwerkraft automatisch statt.

Nach der Entleerung kann die Auswurfklappe 111 wieder zugedrückt werden, wobei der, wieder in der Verriegelungsposition befindliche Zapfen 131 in das Durchgangsloch 1130 der ösenförmig ausgestalteten Haltevorrichtung 113 gleitet. Somit ist die Auswurfklappe 111 des Sammelbehälters 1 wieder verschlossen und der elektromagnetische Verschlussmechanismus 13 wieder in der Verriegelungsposition.

Da bei befülltem Sammelbehälter 1 durch die Lagerung der Akten auf der schräg angestellten Bodenplatte 110 ein hoher Druck auf die grossflächig ausgeführte Auswurfklappe 111 wirkt, wird die Haltevorrichtung 113 senkrecht zur Zapfenlängsachse L weg vom elektromagnetischen Verschlussmechanismus 13 ausgelenkt. Dabei liegt der Zapfen 131 teilweise am Durchgangsloch 1130 auf.

Um eine lineare Zapfenbewegung durch den elektromagnetischen Verschlussmechanismus 13 bei Verwendung des aus dem Stand der Technik bekannten Elektromagneten und gleichem Energieeintrag zu gewährleisten, ist der Zapfen 131 mehrteilig ausgebildet. Es ist eine Lücke zwischen einem ersten dem Elektromagneten 130 zugewandten Zapfenabschnitt 1311 und einem zweiten Zapfenabschnitt 1312 angeordnet. Der zweite Zapfenabschnitt 1312 ist dem Durchgangsloch 1130 zugewandt. Beide Zapfenabschnitte 1311, 1312 sind mit einem Verbindungsmittel 1310 lösbar oder unlösbar miteinander, ein geringes Spiel aufweisend verbunden. Das Verbindungsmittel 1310 ist hier als mindestens ein Kettenschloss ausgebildet. Aufgrund des Spiels können beide Zapfenabschnitte 1311, 1312 geringfügig gegeneinander bewegt werden. Dies wird hier durch die Anordnung von Langlöchern in den Zapfenabschnitten 1311, 1312 erreicht, welche zur Befestigung des starren Kettenschlosses genutzt werden. Jeweils ein Bolzen B des Kettenschlosses 1310 wird durch jeweils ein Langloch des ersten und zweiten Zapfenabschnittes 1311, 1312 geführt, sodass das Kettenschloss 1310 mit jeweils mindestens einer Lasche auf einer Oberseite und einer Unterseite der Zapfenabschnitte 1311, 1312 durch die Bolzen B gehalten, ausgebildet ist. Das Kettenschloss 1310 kann unlösbar an den Zapfenabschnitten 1311, 1312 vernietet werden und ein sogenanntes Nietschloss bilden. Die beiden Laschen auf der Oberseite und der Unterseite können aber auch mittels eines Sicherungsclip lösbar formschlüssig und/oder kraftschlüssig miteinander verbunden sein und ein sogenanntes Clipschloss bilden.

Darüber hinaus kann das Kettenschloss 1310 als Splintschloss oder Schraubschloss ausgestaltet sein. Beim Splintschloss sind Bolzen mit einer einseitigen Bohrung in den Laschen mindestens einseitig mit Splinten gesichert. Beim Schraubschloss weisen die Bolzen mindestens einseitig Gewinde auf, auf welche Muttern aufschraubbar sind und somit die Laschen einseitig lösbar befestigbar sind.

Damit der Zapfen 131 ausreichend senkrecht zur Zapfenlängsrichtung L stabilisiert ist, ist ein Federarm 136 auf dem Montageblech 135 angeordnet. Dieser Federarm 136 verhindert ein Bewegen des Zapfens 131 senkrecht zur Zapfenlängsachse L und damit ein ungewolltes Öffnen der Auswurfklappe 111. Gleichzeitig wirkt der Federarm 136 rückstellend.

Durch die erläuterte Ausgestaltung des Zapfens 131 wird die Kraft des Elektromagneten 130 verbessert auf den Zapfen 131 übertragen, wodurch bei gleichem Energieeintrag in den Elektromagneten und Verwendung des bekannten Elektromagneten 130 der Zapfen 131 auch gegen einen höheren Widerstand linear wegbewegbar ist. Wird der elektromagnetische Verschlussmechanismus 13 ausgelöst, wird der erste Zapfenabschnitt 1311 direkt linear in Richtung zum Elektromagneten 130 gezogen. Da der erste Zapfenabschnitt 1311 indirekt mit dem zweiten Zapfenabschnitt 1312 mit einem Spiel verbunden ist, wird die Kraft vom ersten Zapfenabschnitt 1311 auf den zweiten Zapfenabschnitt 1312 mit einer Zeitverzögerung übertragen. Der zweite Zapfenabschnitt 1312 bleibt damit einen Augenblick länger in Ruhe als der erste Zapfenabschnitt 1311. Erst wenn der erste Zapfenabschnitt 1311 etwa seine maximale Geschwindigkeit aufweist, wird der zweite Zapfenabschnitt 1312 nach Kraftübertragung über das Verbindungsmittel 1310 entsprechend mit maximaler Beschleunigung in Richtung erster Zapfenabschnitt 1311 bzw. Elektromagnet 130 aus der Haltevorrichtung 113 gezogen. Das entsprechend gewählte Spiel entspricht dem praktisch lastfreien Beschleunigungsweg des Elektromagneten.

Damit der notwendige Federarm 136 die lineare Zapfenbewegung nur minimal stört, ist dieser in Bewegungsrichtung des Zapfens federnd ausgeführt und in die Verschwenkrichtung der Auswurfklappe 111, senkrecht zur Zapfenlängsachse L starr ausgeführt. Der Federarm 136 ist in der Schliessposition der Klappe entlastet und hebt somit das gewollte Spiel nicht auf. Der Federarm 136 ist am zweiten Zapfenabschnitt 1312 unlösbar befestigt. Eine Befestigung am ersten Zapfenabschnitt 1311 ist aber auch möglich. Da der Zapfen 131 durch die Mehrteiligkeit und die Befestigung mit einem gewissen Spiel instabil senkrecht zur Zapfenlängsachse L ist, ist die Anordnung des Federarmes 136 zwingend nötig, um ein ungewolltes Öffnen der Auswurfklappe 111 zu vermeiden.

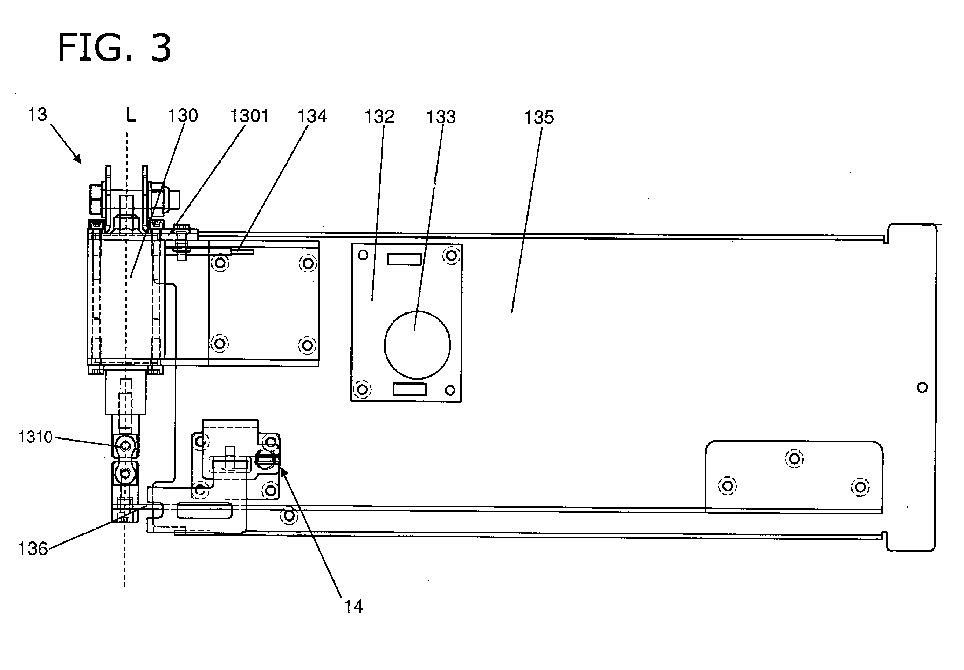

In den Figuren 3 und 4 ist der elektromagnetische Verschlussmechanismus 13 zusätzlich mit einer im Bereich des Zapfens 131 angeordneten mehrteiligen Transportsicherung 14 dargestellt. Diese Transportsicherung 14 ist optional anordbar und in einer Ebene senkrecht zur Zapfenlängsachse L von einer Halteposition, wie in Figur 4 dargestellt in eine Freistellposition bringbar. In der Freistellposition ist die Transportsicherung 14 in einer Ebene senkrecht zur Zapfenlängsachse L verschoben.

### Bezugszeichenliste

- 1: Sammelbehälter
- 2: Rad
- 3: Handlauf
- 10: Behälterhülle
100 Behälterbodenwand
102 Datenträger (TAG)
- 11: Sammelraum
110 schräg angestellte Bodenplatte
111 Auswurfklappe
112 Auswurfklappenscharnier
113 Haltevorrichtung (Klappenöse)
1130 Durchgangsloch
- 12: Einwurf
120 Einwurfschikane
- 13: elektromagnetischer Verschlussmechanismus (Zapfenverschluss)
130 Elektromagnet
1301 Magnethalter
131 Zapfen
1310 Verbindungsmittel (Kettenschloss/Kettenglied)
1311 erster Zapfenabschnitt
1312 zweiter Zapfenabschnitt
B Bolzen
132 interne Steuereinheit mit Kodierung
133 Kondensator
134 elektrische Zuleitung
135 Montageblech
136 Federarm
L Zapfenlängsachse
- 14: Transportsicherung

## Patentansprüche

1. Sammelbehälter (1) eines Aktenentsorgungssystems, umfassend einen Sammelraum (11) mit einer in Entleerungsrichtung geneigt verlaufenden Bodenplatte (110), eine verschwenkbare Auswurfklappe (111) zur Entleerung von Akten aus dem Sammelraum (11) und
einen elektromagnetischen Verschlussmechanismus (13) mit einem Zapfen (131), welcher mit einer an der Auswurfklappe (111) angeordneten Haltevorrichtung (113) wirkverbindbar ist,
**dadurch gekennzeichnet, dass**
der Zapfen (131) mehrteilig, einen ersten Zapfenabschnitt (1311) und einen zweiten Zapfenabschnitt (1312) aufweisend ausgestaltet ist, wobei erster und zweiter Zapfenabschnitt (1311, 1312) über Verbindungsmittel (1310) miteinander ein Spiel aufweisend unlösbar verbunden sind und einen ersten kraftarmen Beschleunigungsweg eines Elektromagneten (130) sicherstellt.

2. Sammelbehälter nach Anspruch 1, **wobei** ein Federarm (136) am Zapfen (131) federbewegbar unlösbar befestigt angeordnet ist, sodass die Stabilität des Zapfens (131) gegen eine Auslenkung senkrecht zur Zapfenlängsachse (L) verstärkt ist.

3. Sammelbehälter nach Anspruch 1, **wobei** der erste Zapfenabschnitt (1311) mit dem zweiten Zapfenabschnitt (1312) über mindestens ein starres Kettenschloss (1310) als Verbindungsmittel (1310) miteinander verbunden ist, wobei Verbindungsösen der Laschen des Verbindungsmittels (1310) an Langlöchern im ersten und zweiten Zapfenabschnitt (1311, 1312) befestigt sind.

4. Sammelbehälter nach Anspruch 2, **wobei** das mindestens eine Kettenschloss (1310) ein Clipschloss (1310) ist, welches einen Sicherungsclip aufweist, durch welchen eine lösbar formschlüssige und/oder kraftschlüssige Verbindung der Bolzen (B) mit den Laschen des Kettenschlosses (1310) erreicht wird.

5. Sammelbehälter nach Anspruch 2, **wobei** das mindestens eine Kettenschloss (1310) unlösbar an den Zapfenabschnitten (1311, 1312) vernietet ist und ein sogenanntes Nietschloss bildet.

6. Sammelbehälter nach einem der Ansprüche 2 bis 5, **wobei** der Federarm (136) am zweiten Zapfenabschnitt (1312) unlösbar befestigt angeordnet ist.

## Claims

1. A collection container (1) of a file disposal system, comprising a collection chamber (11) having a bottom plate (110) running inclined in the emptying direction, a pivotable ejection flap (111) for emptying files from the collection chamber (11), and
an electromagnetic shutter mechanism (13) having a pin (131) which can be operatively connected to a retention device (113) arranged at the ejection flap (111),
**characterized in that**
the pin (131) is of a multi-part configuration having a first pin portion (1311) and a second pin portion (1312), wherein the first and second pin portions (1311, 1312) are connected to each other via connecting means (1310) in a non-detachable manner and with play and ensure a first low-force acceleration distance of an electromagnet (130).

2. The collection container according to claim 1, wherein a spring arm (136) is arranged fixed on the pin in a non-detachable manner and movable by a spring so that the pin's (131) stability against deflection perpendicular to the longitudinal pin axis (L) is increased.

3. The collection container according to claim 1, wherein the first pin portion (1311) is connected to the second pin portion (1312) via at least one chain lock (1310) as a connecting means (1310), wherein connection eyelets of the connecting links of the connecting means (1310) are secured at oblong holes in the first and second pin portions (1311, 1312).

4. The collection container according to claim 2, wherein the at least one chain lock (1310) is a clip lock (1310) that has a locking clip by means of which a detachable positive and/or nonpositive connection of the studs (B) with the connecting links of the chain lock (1310) is achieved.

5. The collection container according to claim 2, wherein the at least one chain lock (1310) is non-detachably riveted to the pin portions (1311, 1312) and forms a so-called rivet lock.

6. The collection container according to any one of the claims 2 to 5, wherein the spring arm (136) is arranged fixed to the second pin portion (1312) in a non-detachable manner.

## Revendications

1. Récipient collecteur (1) d'un système de destruction de documents, comprenant un espace collecteur (11) comportant une plaque de fond (110) s'étendant en inclinaison dans la direction de vidage, un clapet d'éjection (111) basculant pour vider les documents hors de l'espace collecteur (11) et
un mécanisme de fermeture électromagnétique (13) comportant un tourillon (131), qui peut être relié opérationnellement au dispositif de retenue (113) disposé sur le clapet d'éjection (111),
**caractérisé en ce que**
le tourillon (131) est conçu en plusieurs parties, une première portion de tourillon (1311) et une deuxième portion de tourillon (1312), dans lequel la première et la deuxième portion de tourillon (1311,1312) sont reliées l'une à l'autre de manière irréversible en présentent un jeu par l'intermédiaire de moyens de liaison (1310) et garantissent un premier trajet d'accélération à faible puissance d'un électroaimant (130).

2. Récipient collecteur selon la revendication 1, dans lequel un bras de ressort (136) est disposé sur le tourillon (131) en étant fixé de manière irréversible déplaçable par ressort, de telle sorte que la stabilité du tourillon (131) contre une déviation soit renforcée perpendiculairement à l'axe longitudinal du tourillon (L).

3. Récipient collecteur selon la revendication 1, dans lequel la première portion de tourillon (1311) est reliée à la deuxième portion de tourillon (1312) par l'intermédiaire d'au moins un joint de chaîne (1310) rigide faisant office de moyen de liaison (1310), dans lequel des oeillets de liaison des languettes du moyen de liaison (1310) sont fixées sur des trous oblongs dans la première et la deuxième portion de tourillon (1311,1312).

4. Récipient collecteur selon la revendication 12, dans lequel au moins un joint de chaine (1310) est un joint à clip (1310), qui présente un clip de sécurité, par l'intermédiaire duquel une liaison réversible par conjonction de forme et/ou conjonction de force du boulon (B) avec les languettes du joint de chaîne (1310) est obtenue.

5. Récipient collecteur selon la revendication 2, dans lequel au moins un joint de chaîne (1310) est riveté de manière irréversible sur les portions de tourillon (1311,1312) et forme ce que l'on appelle une attache à riveter.

6. Récipient collecteur selon une des revendications 2 à 5, dans lequel le bras de ressort (136) est disposé en étant fixé de manière irréversible sur la deuxième portion de tourillon (1312).
